# EUROPEAN PATENT APPLICATION

(11) **EP 4 718 044 A1**
(43) Date of publication of application: **01.04.2026**
(21) Application number: 24203308.2
(22) Date of filing: 27.09.2024
(51) Int. Cl.: G01K 1/10, G01D 11/24, G01D 11/30, G01K 1/14, G01K 13/02

(54) **INSTALLATION ASSEMBLY AND ITS USE**

(71) Applicant: Endress+Hauser Wetzer GmbH+Co. KG, 87484 Nesselwang (DE)
(72) Inventor: Eralti, Davide, 20854 Vedano Al Lambro (MB) (IT); Fortunato, Gianluca, Milano 20153 (IT); Micieli, Andrea, 20052 Vignate (MI) (IT); Tagliabue, Davide, 20037 Paderno Dugnano (IT)
(74) Representative: Endress + Hauser Group Services (Deutschland) AG+Co. KG

(57) **Abstract**

The invention relates to an Installation assembly 1 for determining and/or monitoring a process variable, for example the temperature T of a medium M, for installation at a container 10, with a failure detection unit 3. A welded metal seal 2 is provided at an upper end 32 of the failure detection unit 3 with a safety chamber 30, such that the welded metal seal 2 closes off the safety chamber 30, while simultaneously serving for fastening the failure detection unit 3 to the elongated measuring insert 4.

## Description

The invention relates to an Installation assembly for determining and/or monitoring a process variable, for example the temperature of a medium for installation at a container with a failure detection unit.

Thermometers for determining and/or monitoring the temperature are known from the prior art in a great variety of embodiments. Thus, there are thermometers which use the expansion of a liquid, a gas or a solid with a known coefficient of expansion, in order to measure temperature, or also others which relate the electrical conductivity of a material, or a quantity derived therefrom, to the temperature, such as electrical resistance when using, for example, resistance elements, or the thermoelectric effect in the case of thermocouples. On the other hand, radiation thermometers, in particular pyrometers, use the heat radiation of a substance to determine its temperature. The underlying measurement principles have each been described in a variety of publications.

In the case of a temperature sensor in the form of a resistance element, so-called thermistors have become known. They are also referred to as PTC or NTC thermistors - short for positive or negative temperature coefficient, respectively. PTC thermistors are particularly suitable as temperature sensors since their resistance increases linearly to first order as the temperature rises. Among the PTC thermistors, platinum is again a preferred material and widely used, since platinum exhibits an overall dependence of resistance on temperature that is at most quadratic. Resistance elements are typically designed to have a certain nominal resistance at a reference temperature of 0°C and are commercially available as so-called Pt10 (10 Ohm), Pt100 (100 Ohm) and Pt1000 (1 kOhm) resistance elements.

The resistance element may be embodied as a so-called wound resistance thermometer or is embodied as a layer mounted on a substrate in thin- or thick film technology. In the case of a thin-film sensor, for example, a sensor element provided with connecting wires and mounted on a carrier substrate is used, wherein the back side of the carrier substrate usually has a metal coating.

In the case of temperature sensors in the form of thermocouples, however, the temperature is determined by a thermovoltage which arises between the unilaterally connected thermowires made of different materials. Thermocouples according to standard IEC 60584-x, e.g., thermocouples of the types R, S, B, J, T, E, K, N, C and A, are usually used as temperature sensors for temperature measurement. However, other pairs of materials, for example those with a measurable Seebeck effect, are also possible.

Often, the temperature sensor is arranged in a so-called measuring insert, comprising an elongated tubular member serving as a sheath for the temperature sensor. The sheath contains e.g. an electrically isolating filler into which the temperature sensor, and at least part of electrical connection lines, which serve for contacting the temperature sensor, are embedded. Typically, for example for an insertion thermometer, the measuring insert protrudes into the medium for the determination of the temperature, starting from a distal end region of the measuring insert. Thus, the distal end region faces the medium and/or dips into the medium and the proximal end region (which is opposite the distal end region in the longitudinal direction of the measuring insert) faces away from the medium. The elongated tubular member is especially closed or sealed off at a distal end region.

The measuring insert may be assembled in a protective tube, especially a metallic protective tube, for example a thermowell. Also, the protective tube is typically sealed off at its distal end, to protect the components, for example the measuring insert and/or the temperature sensor, against an environment to which the thermometer is exposed, e.g., a medium into which the thermometer is inserted.

In many hazardous material- and high-energy applications, it is necessary to use installation assemblies, to observe and/or to monitor conditions in a process, especially by using the above-mentioned thermometers. In such case, it is further important that all necessary safety precautions, especially regarding the sealing from the process medium contained in the container, are always assured.

Known from the European patent application EP 2 343 514 A1 is an installation assembly with an elongated measuring insert, wherein, for accommodating the measuring insert, a first safety chamber in a first housing part is provided, as well as a second safety chamber in a second housing part and a sealing apparatus. The sealing apparatus serves, in case the measuring insert introduced into the assembly housing, to seal, especially in a pressure- and/or liquid-tight manner, the second safety chamber relative to the first safety chamber. Additionally, the sealing apparatus proposed there must be manually operated, to achieve the sealing action. The patent application US 2013/0152780 A1 discloses a similar installation assembly with a sealing apparatus.

The European Patent application EP 3 454 020 A1 in turn discloses an installation assembly, wherein a welded metal seal closes off a safety chamber. However, this safety chamber is formed around the protective tube with the measuring insert, and affixed in a region neighbouring the process connection. Additional connecting means are needed to affix the safety chamber around the protective tube. The installation assembly allows for an easy and straightforward exchange of components of the installation assembly.

The European Patent EP 3 118 583 B1 discloses a self-sealing installation assembly, wherein the safety chamber of a failure detection unit is actively sealed, for example by moving pistons relative to corresponding bushings. This is, for instances, initiated by the installation assembly, in case a failure-sensing element detects a failure condition of the installation assembly. The type of seal disclosed therein, such as the elastic O-rings, is however not suited for all applications. Furthermore, the sealing of the safety chamber is only active upon activation of the sealing mechanism.

It is therefore the object of the present invention to provide an installation assembly for installation at a container, wherein the safety chamber of the failure detection unit is embodied to permanently seal the environment from medium and/or gas penetrating into the protective tube in case of a damage of the protective tube, especially for a chemically aggressive medium under high-pressure conditions.

The object is achieved by an installation assembly according to the independent Claim. Advantageous embodiments are respectively specified in the dependent claims, wherein all embodiments of the installation assembly according to the invention are, of course, mutatis mutandis encompassed by the measuring site and the use according to the invention and vice versa.

Regarding the installation assembly, the object is achieved by an installation assembly, wherein the installation assembly is installable at a container for determining and/or monitoring a process variable of a medium contained in the container, and wherein the installation assembly comprises:
- an elongated measuring insert having a length in a longitudinal direction, with a sensing element for sensing the process variable of the medium,
   wherein the measuring insert extends along its longitudinal direction from a proximal end region of the measuring insert to a closed-off, distal end region of the measuring insert, which distal end region is intended for protruding into the interior of container for the determining and/or monitoring of the process variable;
- a protective tube with a guide for guiding the measuring insert, wherein the protective tube has a process connection for installing the installation assembly at the container,
   and wherein the protective tube receives a first section of the measuring insert accommodating the sensing element, which first section extends from the distal end region to a second section of the measuring insert, wherein the second section directly adjoins the first section in the longitudinal direction and wherein the second section is to be located outside of container for the determining and/or monitoring of the process variable;
- a failure detection unit with a safety chamber, wherein the failure detection unit serves as a guide for the measuring insert and receives the second section such that safety chamber surrounds an outer surface of the second section,
   wherein an upper end of the protective tube, which upper end faces the proximal end region, is fastened to a lower end of the failure detection unit, which lower end faces the distal end region; and
- a welded metal seal provided at an upper end of the failure detection unit, which upper end faces the proximal end region,
   and wherein the welded metal seal, at the same time, directly fastens the failure detection unit to the second section of measuring insert and closes off the safety chamber at the upper end in a gas-tight and liquid-tight manner.

Thus, according to the invention, the safety chamber does not surround the protective tube, but only the measuring insert to which the failure detection unit is directly attached by means of the welded metal seal. The safety chamber directly encompasses the measuring insert, and the welded metal seal serves, advantageously, both for fastening the failure detection unit to the measuring insert and for sealing the safety chamber at the upper end. Thus, in case there is medium and/or gas escaping from the medium leaking into the safety chamber, due to a damage of the protective tube, the medium and/or gas is trapped inside the safety chamber by the welded metal seal which closes off the safety chamber in a gas-tight and liquid-tight manner. The medium and/or gas cannot escape into the environment, even when the protective tube is damaged, for example, in case the medium contains H2, when a damage is caused by a process known as hydrogen-embrittlement. This double barrier for the medium provided by the welded metal seal is always present, even before any medium in the safety chamber is detected by the failure-sensing element mentioned below and without any activation of an (automatic or manual) sealing mechanism.

The welded metal seal has, preferably, a thickness of at least 0,1 mm in the longitudinal direction. It comprises, preferably, stainless steel and a metallic alloy, for example an alloy comprising Nickel. It may be, for example, welded by using a ring-shaped element acting as a source element for the welded metal seal. The welded metal seal is provided, for example, by using laser beam welding or traditional welding techniques.

The protective tube acts as a thermowell for the measuring insert, especially for the first section of the measuring insert with the sensing element protruding into the container. As mentioned before, the sensing element is typically contacted with electrical connection lines, for example in a 2-, 3-, 4- (or more) wire connection, typically also provided within the measuring insert.

The installation assembly is embodied such that, when installed at the container, the protective tube protrudes via the process connection into the container, only with the protruding part of the first section of the measuring insert. The process connection of the protective tube serves for, for example, providing a threaded connection, a welded connection, and/or a flange connection of the protective tube with a corresponding connection the container.

In an embodiment of the installation assembly, the upper end of the protective tube is fastened to the lower end of the failure detection unit in a gas-tight and liquid-tight manner, wherein an opening of the safety chamber, which opening is provided at the lower end of the failure detection unit connects the safety chamber with an interior of the protective tube.

Thus, when the installation assembly is installed at the container, in case that medium from the container penetrates the protective tube, the medium, or a gas escaping from the medium, is guided from an interior of the protective tube through the opening into the safety chamber.

To this end, the protective tube is fastened to the lower end of the failure detection unit by using, for example, a flange, a threaded connection, a welded connection, or any other mechanical sealing connection, for example using a flat copper gasket or also a direct weld, for providing a (second) welded metal seal at the lower end of the failure detection unit.

In an embodiment of the installation assembly, it comprises a fitting piece with a guide for guiding the measuring insert, wherein the fitting piece receives a third section of the measuring insert directly adjoining the second section in the longitudinal direction,
wherein the fitting piece has a lower end facing the distal end region and an upper end facing the proximal end region,
and wherein the welded metal seal fastens the following to one another:
   - the lower end of the fitting piece, the second section of the measuring insert, and the upper end of the failure detection unit.

Advantageously, the welded metal seal serves for fastening the fitting piece at its lower end, the measuring insert at its second section as well as the failure detection unit at its upper end together, while, at the same time, sealing off the safety chamber at the upper end of the failure detection unit.

The installation assembly may comprise additional fastening means for fastening the fitting piece and the failure detection unit, for example, a threaded connection.

For example, the fitting piece is made of a metal, or an alloy containing several metals. The fitting piece is, for example, fastened to the insert by at least one of the following techniques: welded, crimped and/or potted or another friction-locked connection using mechanical means.

In an embodiment of the installation assembly, it comprises a transmitter unit that houses an electronics unit having measurement- and operating circuitry, for operating the sensing element wherein the transmitter unit is fastened to the upper end of the fitting piece.

Thus, the measuring insert is guided through the fitting piece to the transmitter unit and, the measuring insert in turn is, for example, fastened to the transmitter unit at the proximal end of the measuring insert. Thus, the aforementioned connection lines for contacting the sensing element are guided within the measuring insert acting as a sheath for the connection lines. The connection lines protrude from the proximal end of the measuring insert and are connected to the measurement- and operating circuitry, for conveying a measurement signal to the transmitter unit.

The transmitter unit is fastened to the to the upper end of the fitting piece, for example, by using a threaded connection.

In an embodiment of the installation assembly, the welded metal seal is arranged at no more than 1/3 of the length, especially not more than 1/5 of the length, from the proximal end, in the longitudinal direction. Thus, the welded metal seal is arranged in a region close to the proximal end.

In an embodiment of the installation assembly, the failure detection unit comprises a failure-sensing element embodied to detect a malfunction of the installation assembly, which malfunction is associated with the intrusion of the medium into the safety chamber and/or the intrusion of gas escaping out of the medium into the safety chamber.

To this end, the failure detection unit may, similar to the disclosure of the European Patent EP 3 118 583 B1, comprise an electronics unit, which is embodied to convert a measuring signal from the failure-sensing element into a failure signal and forward the failure signal towards, for example, a monitoring element, towards a plant control system and/or create an alarm. The failure sensing element is embodied to detect a failure condition especially adapted for the corresponding process (medium, temperature and pressure) the installation assembly is intended for.

For this purpose, the failure sensing may comprise, for example, at least one of the following: a pressure sensor or a pressure switch, a temperature sensor or switch, an optical sensor, or an electrochemical sensor embodied to detect the presence or measure the concentration of a target gas, by oxidizing or reducing the target gas at an electrode.

Similarly, the failure-sensing element may comprise a PID (Photo Ionization Detector) sensor embodied to detect volatile organic compounds and other target gases, especially in concentrations, from sub parts per billion to 10 000 parts per million (ppm).

The failure-sensing element may comprise a pellistor gas sensor, which is a solid-state device embodied to detect gases which are either combustible or which have a significant difference in thermal conductivity compared to that of air. Typically, pellistor gas sensors elements consist of small 'pellets' of a catalyst-loaded ceramic, whose resistance changes in the presence of the target gas- hence the term 'pellistor' being a combination of 'pellet' and 'resistor'.

Furthermore, the failure-sensing element may be a thin film gas sensor, for example adapted to detect H2 as a target gas, such as the NTC thermistor described in the scientific article titled "Hydrogen Sensor Based on NTC Thermistor with Pt-Loaded WO3/SiO2 Coating" by Sun et al, published in Micromachines 2022, 13, 2219. 2022, 13, https://doi.org/10.3390/mi13122219. In this case, the gas sensor comprises one or more catalytic layers in contact with the NTC thermistor, which catalytic layers, when exposed to a critical amount of H2, produce an exothermic reaction resulting in a temperature change detectable with the NTC thermistor.

The failure-sensing element may also be a film sensor based on Palladium, wherein the adsorption of the target gas, especially H2, on the Palladium thin film is determined. For example, this includes, but is not limited to,
- metal Oxide Semiconductor (MOS) thin film Pd sensors acting as capacitors or field effect transistors, wherein the adsorbed gas on the Palladium thin film forms a dipole at the metal oxide interface, changing the electrical characteristics of the capacitor or field effect transistor;
- thin film resistors, wherein a change in resistivity of a Pd in the presence of the gas is monitored to determine the presence and/or concentration of the target gas;
- pyroelectric sensors, wherein a thin film of Pd is deposited on the surface of a pyroelectric material, whose polarization is a function of temperature. Thus, when the target gas is adsorbed on the Pd surface, a heat of adsorption of the adsorption process produces a measurable potential difference, which is in turn indicative of the presence and/or concentration of the at least one target gas;
- piezoelectric sensors, wherein an oscillation frequency of a piezoelectric material is a function of its mass, which is determined by the amount of adsorption of H2 on a Pd coated piezoelectric surface, especially with a thin film Pd coating;
- SAW (Surface Acoustic Wave) sensors, wherein adsorbed H2 on a Pd thin film perturbs surface acoustic waves on a piezoelectric substrate; and
- fiber optic sensors, wherein the adsorption of H2 on a Pd surface coating, especially a thin film Pd coating, on an optic fiber alters the optical property, (absorbance, reflectance, luminescence
   and/or scattering) of the fiber.

In an embodiment of the installation assembly, the sensing element is arranged in the interior of the measuring insert such that the measuring insert acts as a sheath for the sensing element, and wherein the sensing element serves for determining and/or monitoring the temperature as the process variable of the medium.

The temperature sensing element is especially arranged in a sensing section of the measuring insert, which is intended for protruding into the interior of container for the determining and/or monitoring of the process variable.

In an embodiment of the installation assembly, a gas-repelling layer is provided on one or more repelling surfaces of the failure detection unit and/or of the second section,
and wherein the gas-repelling layer is equipped to impede a diffusion of or a permeation of one more target gases, especially H2, on or through the repelling surfaces.

The repelling surface may be an inner surface provided in the safety chamber, for example, an inner surface of the safety chamber facing the measuring insert, or an outer surface of the second section of the measuring insert, or an outer surface of the failure detection unit, facing an outer environment surrounding failure detection unit. The gas-repelling layer may be applied to the one or more repelling surfaces in form of a coating.

In an embodiment of the installation assembly, the welded metal seal has a Youngs' Modulus of at least 150 GPa (GigaPascal), especially at least 200 GPa. Thus, the welded metal seal is mechanically strong enough to seal off the safety camber, even for high-pressure applications, in case pressurized medium or gas can escape from the container through a damaged protective tube.

In an embodiment of the installation assembly, in case the installation assembly comprises one or more further sealing elements besides the welded metal seal, especially including a further sealing element for sealing a connection between the upper end of the protective tube and the lower end of the failure detection unit, the one or more further sealing elements unit have a Youngs' Modulus of at least 100 GPa.

To this end, the installation assembly is, for example, preferably free of any rubber-/plastic-based sealing elements such as O-rings. Depending on the type of medium used, polymer-based sealing elements may be prone to (chemically induced) degradation by the medium and should therefore be avoided in the installation assembly.

Regarding the measuring site, the problem is solved by a measuring site, comprising, a container for containing a medium whose temperature is determined and/or monitored and an installation assembly according to the invention, wherein the installation assembly is installed at the container, wherein the process connection of the protective tube is fastened to a corresponding receiving connection of the container, by using one of the following,
- a threaded connection, a welded connection, a flange connection.

The invention also relates to a use of the Installation assembly according to the invention, for installation at a container containing a medium for determining and/or monitoring the process variable of the medium, wherein the container is a pressurized vessel, especially pressurized to an overpressure which is at least 1 bar greater than an ambient pressure in an environment of the container.

In an embodiment of the use, the temperature of the medium is above 150° C, especially above 250° C.

In an embodiment of the use, the medium comprises H2.

In an embodiment of the use, the medium comprises Ketones and/or Ester Solvents, or derivatives thereof.

The invention is explained in more detail with reference to the following figures, which are not to scale, where identical reference signs denote identical features. Where clarity so requires or it otherwise appears expedient, reference signs already mentioned may be omitted in subsequent figures.

The following are shown:
Fig. 1a and 1b show a schematic side view of an embodiment of the installation assembly 1 according to the invention; and
Fig. 2 shows a schematic side view of an embodiment of the measuring site 100 according to the invention.

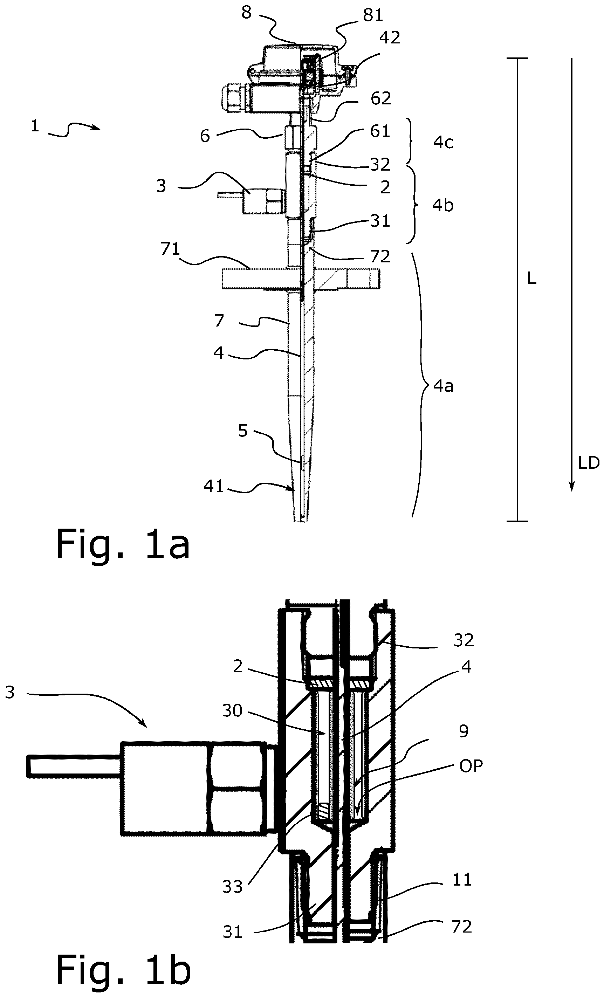

Fig. 1a shows a side view of an installation assembly 1 according to an embodiment of the invention, wherein the installation assembly 1 comprises an elongated measuring insert 4 acting as a sheath for a sensing element 5, here: a temperature sensor for sensing the temperature T of a medium M. The sensing element 5 is contacted with the electronics unit 81 via connection lines (not shown) provided within in the elongated measuring insert 4, for example in a 2-, 3-, 4- (or more) wire connection, typically also provided within the measuring insert. The electronics unit 81 is housed in a transmitter unit 8 with a housing.

The electronics unit 81 comprises a measurement- and operating circuitry, for operating the sensing element 5, for example for providing an electrical voltage to the sensing element 5 and/or, for transforming a measurement signal conveyed by the connection lines from the sensing element 5 to the electronics unit 81 into a measured value for the process variable of the medium, for example a measured value for the temperature T of the medium M.

The elongated measuring insert 4 extends from the proximal end region 42 connected to the transmitter unit 8 to a distal end region 41, and is especially closed off at its distal end region 41. The elongated measuring insert 4 has a total length L in its longitudinal direction LD.

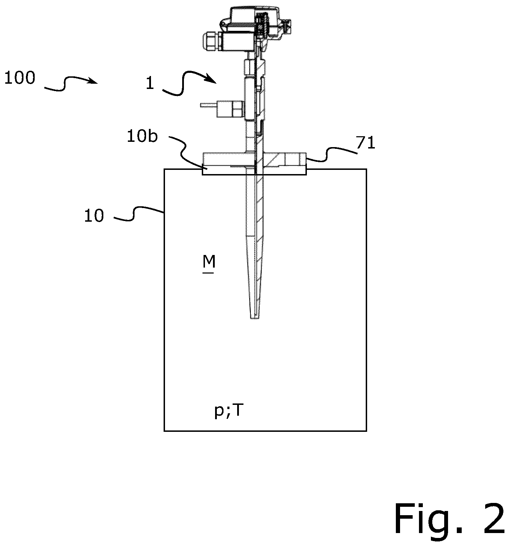

The sensing element 5 for sensing the temperature T is typically disposed at or near the distal end region 41. A first section 4a of the elongated measuring insert 4 serves for protruding into a container 10, and is received in a corresponding guide, especially a bore, of a protective tube 7. For protruding into the container 10, the protective tube 7 has a process connection 71 for connection to a corresponding receiving connection 10b of the container (container 10 is shown in Fig. 2 below).

The protective tube 7 is connected at its upper end 72, which is facing the proximal end region 42, to a failure detection unit 3 at its lower end 31, which is facing the distal end region 41. Details of the failure detection unit 3, also regarding the connection with the protective tube 7 and the fitting piece 6. are shown in a more detailed view in Fig. 1b.

The failure detection unit 3 has a guide for receiving a second section 4b of the elongated measuring insert 4, wherein a safety chamber 30 is formed around a circumference in a subsection of the second section 4b. The second section 4b adjoins directly the first section 4a of the elongated measuring insert 4, in the longitudinal direction LD.

The failure detection unit 3 further comprises a failure-sensing element 33, for example a gas sensor which is embodied to detect the presence or determine the concentration of H2 as a first target gas within the safety chamber 30 as set out above. Also, the failure detection unit 3 may comprise an electronics unit (not shown here) for processing a measured signal generated by the failure-sensing element 33. The details of the failure-sensing element 33 are not essential for the invention and the safety chamber 30 may comprise other or additional failure-sensing elements 33 embodied to detect the presence of medium or a target gas within the safety chamber 30.

At the connection of the failure detection unit 3 to the protective tube 7, the safety chamber 30 has an opening OP, which is embodied to guide medium or gas from within the protective tube 7 into the safety chamber. At the upper end 32 of the failure detection unit 3, a welded metal seal 2 is provided, which, at the same time, fastens the failure detection unit 3 to the second section 4b of the elongated measuring insert 4 and closes off the safety chamber 30 at the upper end 32 of the failure detection unit 3, in an air-tight and liquid-tight manner.

The welded metal seal 2 serves as a permanent, second seal in addition to the sealing effect of the protective tube 7. The protective tube 7 is especially closed off at a distal end which distal end is intended for insertion into the medium M. Thus, even in case a damage to the protective tube 7 occurs, which may lead to medium M and/or gas escaping out of the medium M and through the protective tube 7 via the opening OP in the safety chamber 30, the gas or medium M cannot reach an outer environment surrounding the installation assembly 1. Due to the welded metal seal 2, the gas and/or medium M is trapped inside the safety chamber 30.

The connection between the protective tube 7 and the lower end 31 of the failure detection unit 3 is, for example, embodied as a threaded or welded connection. In case a further sealing element 11 is provided, in this connection, the further sealing element 11 is, preferably, also not an O-ring but similarly embodied as a mechanical sealing connection, for example using a flat copper gasket or also a direct weld, for providing a (second) welded metal seal at the connection of the lower end 31 of the failure detection unit 3 and the upper end 72 of the protective tube 7.

Also, a fitting piece 6 is fastened with the welded metal seal 2 to the elongated measuring insert 4, wherein the upper end 32 of the failure detection unit 3 is connected to a lower end 61 of the fitting piece 6. In addition to the fastening of the fitting piece 6 with the welded metal seal 2, the installation assembly 1 may comprises a threaded connection between the lower end 61 of the fitting piece 6 and the upper end 32 of the failure detection unit 3. An upper end 62 of the fitting piece 6 facing the proximal end region 42 is connected, for example with a threaded connection, to the transmitter unit 8.

Thus, starting from the distal end region 41 of the elongated measuring insert 4 in the longitudinal direction LD, the elongated measuring insert 4 is received with its first section 4a by a guide, especially a bore, of the protective tube 7, then with its second section 4b by the failure detection unit 3, whereby the safety chamber 30 is formed, especially around the circumference of a subsection of the second section 4b. Finally, before reaching the transmitter unit 8, the fitting piece 6 receives a third section 4c of the elongated measuring insert 4.

The installation assembly 1 is especially suited for installation at a container 10 containing a chemically aggressive, high-temperature T and/or high-pressure P medium M , especially containing H2. To this end, the safety chamber 30 and/or an outside surface of the second section 4b of the elongated measuring insert 4 facing the failure detection unit 3 may be coated with a gas-repelling layer 9, for example a H2 repelling layer, to better immobilize H2 as the target gas in the safety chamber 30. Similarly, such a gas-repelling layer 9 may be provided also on the outside of the failure detection unit 3.

Finally, Fig. 2 shows the measuring site 100, comprising an installation assembly 1 according to the invention installed in the container 10, wherein the process connection 71 of the protective tube 7 of the installation assembly 1 is fastened to corresponding receiving connection 10b of the container 10 containing the medium M at high pressure p and/or temperature T. Especially, the medium M comprises Ketones and/or Ester Solvents, or derivatives thereof. In this case, the medium M can chemically damage sealing elements such as elastic O-rings. The medium M is at a temperature of more than 150 °C and/or pressurized to have an overpressure of more than 1 bar, compared to an ambient pressure in an environment of the container 10.

Advantageously, in the installation assembly 1 according to the invention, at least the welded metal seal 2 sealing off the safety chamber 30 is a purely metallic seal, especially with a high Youngs Modulus of at least 200 GPa. This seal 2 blocks off the medium m and/or gas escaping from the safety chamber 30 in the event of damage of the protective tube 7. Thus, when Ketones and/or Ester solvents or their derivates are present in the medium M, the welded metal seal 2 cannot be damaged to such an extent that the safety chamber 30 becomes no longer gas-tight and or liquid-tight.

### Reference Signs and Symbols

- 1: installation assembly
- 100: measuring site
- 2: welded metal seal
- 3: failure detection unit
- 30: safety chamber
- 31: lower end of 3
- 32: upper end of 3
- 33: failure-sensing element
- 4: elongated measuring insert
- 41: distal end region
- 42: proximal end region
- 4a: first section of 4
- 4b: second section of 4
- 4c: third section of 4
- 5: sensing element
- 6: fitting piece
- 61: lower end of 6
- 62: upper end of 6
- 7: protective tube
- 72: upper end
- 71: Process connection
- 8: transmitter unit
- 81: electronics unit
- 9: gas-repelling layer
- 10: container
- 10b: receiving connection of 10
- 11: further sealing elements

- L: length
- LD: longitudinal direction
- M: medium
- OP: opening

## Claims

1. Installation assembly (1), wherein the installation assembly (1) is installable at a container (10) for determining and/or monitoring a process variable of a medium (M) contained in the container (10), and wherein the installation assembly (1) comprises:
- an elongated measuring insert (4) having a length (L) in a longitudinal direction (LD), with a sensing element (5) for sensing the process variable of the medium (M),
wherein the measuring insert (4) extends along its longitudinal direction (LD) from a proximal end region (42) of the measuring insert (4) to a closed-off, distal end region (41) of the measuring insert (4), which distal end region (41) is intended for protruding into the interior of container (10) for the determining and/or monitoring of the process variable;
- a protective tube (7) with a guide for guiding the measuring insert (4), wherein the protective tube (7) has a process connection (71) for installing the installation assembly (1) at the container (10),
and wherein the protective tube (7) receives a first section (4a) of the measuring insert (4) accommodating the sensing element (5), which first section (4a) extends from the distal end region (41) to a second section (4b) of the measuring insert (4), wherein the second section (4b) directly adjoins the first section (4a) in the longitudinal direction (LD) and wherein the second section (4b) is to be located outside of container (10) for the determining and/or monitoring of the process variable;
- a failure detection unit (3) with a safety chamber (30), wherein the failure detection unit (30) serves as a guide for the measuring insert (4) and receives the second section (4b) such that safety chamber (30) surrounds an outer surface of the second section (4b),
wherein an upper end (72) of the protective tube (7), which upper end (72) faces the proximal end region (42), is fastened to a lower end (31) of the failure detection (3) unit, which lower end (31) faces the distal end region (41); and
- a welded metal seal (2) provided at an upper end (32) of the failure detection unit (3), which upper end (32) faces the proximal end region (42),
and wherein the welded metal seal (2), at the same time, directly fastens the failure detection unit (3) to the second section (4b) of measuring insert (4) and closes off the safety chamber (30) at the upper end (32) in a gas-tight and liquid-tight manner.

2. Installation assembly (1) according to Claim 1, wherein the upper end (72) of the protective tube (7) is fastened to the lower end (32) of the failure detection unit (3) in a gas-tight and liquid-tight manner,
and wherein an opening (OP) of the safety chamber (30), which opening (OP) is provided at the lower end (31) of the failure detection unit (3) connects the safety chamber (30) with an interior of the protective tube (7).

3. Installation assembly (1) according to Claim 1 or 2, comprising a fitting piece (6) with a guide for guiding the measuring insert (4), wherein the fitting piece (6) receives a third section (4c) of the measuring insert (4) directly adjoining the second section (4b) in the longitudinal direction (LD),
wherein the fitting piece (6) has a lower end (61) facing the distal end region (41) and an upper end (62) facing the proximal end region (42),
and wherein the welded metal seal (2) fastens the following to one another:
- the lower end (61) of the fitting piece (6), the second section (4b) of the measuring insert (4), and the upper end (32) of the failure detection unit (3).

4. Installation assembly (1) according to at least one of the preceding Claims, comprising a transmitter unit (8) that houses an electronics unit (81) having measurement- and operating circuitry, for operating the sensing element (5), wherein the transmitter unit (8) is fastened to the upper end (62) of the fitting piece (6).

5. Installation assembly (1) according to at least one of the preceding Claims, wherein the welded metal seal (2) is arranged at no more than 1/3 of the length (L), especially not more than 1/5 of the length (L), from the proximal end (42), in the longitudinal direction (LD).

6. Installation assembly (1) according to at least one of the preceding Claims, wherein the failure detection unit (3) comprises a failure-sensing element (33) embodied to detect a malfunction of the installation assembly (1), which malfunction is associated with the intrusion of the medium (M) into the safety chamber (30) and/or the intrusion of gas escaping out of the medium (M) into the safety chamber.

7. Installation assembly (1) according to at least one of the preceding Claims, wherein the sensing element (5) is arranged in the interior of the measuring insert (4) such that the measuring insert (4) acts as a sheath for the sensing element (5), and wherein the sensing element (5) serves for determining and/or monitoring the temperature (T) as the process variable of the medium (M).

8. Installation assembly (1) according to at least one of the preceding Claims,
wherein a gas-repelling layer (9) is provided on one or more repelling surfaces of the failure detection unit (3) and/or of the second section (4b),
and wherein the gas-repelling layer (9) is equipped to impede a diffusion of or a permeation of one more target gases, especially H2, on or through the repelling surfaces.

9. Installation assembly (1) according to at least one of the preceding Claims, wherein the welded metal seal (2) has a Youngs' Modulus of at least 150 GPa (GigaPascal), especially at least 200 GPa.

10. Installation assembly (1) according to at least one of the preceding Claims wherein in case the installation assembly comprises one or more further sealing elements besides the welded metal seal, especially including a further sealing element for sealing a connection between the upper end of the protective tube and the lower end of the failure detection unit, the one or more further sealing elements unit have a Youngs' Modulus of at least 100 GPa.

11. Measuring site (100), comprising,
a container (10) for containing a medium (M) whose temperature is determined and/or monitored; and,
an installation assembly (1) according to one of the previous Claims, wherein the installation assembly (1) is installed at the container (10),
and wherein the process connection (71) of the protective tube (7) is fastened to a corresponding receiving connection (10b) of the container (10), by using one of the following,
- a threaded connection, a welded connection, a flange connection.

12. Use of an Installation assembly (1) according to one of the previous Claims 1 to 10 for installation at a container (10) containing a medium (M) for determining and/or monitoring the process variable of the medium (M), wherein the container (10) is a pressurized vessel, especially pressurized to an overpressure which is at least 1 bar greater than an ambient pressure in an environment of the container.

13. Use according to Claims 12, wherein the temperature (T) of the medium (M) is above 150° C, especially above 250° C.

14. Use according to any one of the previous Claims 12 to 13, wherein the medium (M) comprises H2.

15. Use according to any one of the previous Claims 13 to 14, wherein the medium (M) comprises Ketones and/or Ester Solvents, or derivatives thereof.
